# EUROPEAN PATENT SPECIFICATION

(11) **EP 2 998 843 B1**
(45) Date of publication and mention of the grant of the patent: **04.10.2017**
(21) Application number: 13897105.6
(22) Date of filing: 08.11.2013
(51) Int. Cl.: G06F 3/048, G06F 3/0488

(54) **INTELLIGENT TERMINAL AND METHOD FOR DISPLAYING INPUT OPERATION INTERFACE THEREOF**
INTELLIGENTES ENDGERÄT UND VERFAHREN ZUR ANZEIGE VON EINGABESCHNITTSTELLEN DAVON
TERMINAL INTELLIGENT ET SON PROCÉDÉ POUR AFFICHER UNE INTERFACE D'OPÉRATION D'ENTRÉE

(43) Date of publication of application: 23.03.2016
(73) Proprietor: Huawei Technologies Co., Ltd., Longgang District Shenzhen, Guangdong 518129 (CN)
(72) Inventor: LU, Haizhao, Shenzhen Guangdong 518129 (CN); ZHAO, Zhangquan, Shenzhen Guangdong 518129 (CN)
(74) Representative: Maiwald Patentanwalts GmbH
(86) International application number: PCT/CN2013/086780
(87) International publication number: WO 2015/066892

(56) References cited:
- EP-A1- 2 629 181
- EP-A2- 2 487 576
- WO-A2-2013/157232
- CN-A- 101 916 161
- CN-A- 101 968 710
- CN-A- 102 232 211
- CN-A- 102 810 039
- US-A1- 2008 141 149
- US-A1- 2010 037 135
- US-A1- 2013 234 948

## Description

### TECHNICAL FIELD

The present invention relates to the field of hand-held terminals, and in particular, to a hand-held terminal and a method for determining an input operation interface thereof.

### BACKGROUND

A hand-held terminal gradually becomes a necessary communications tool of people. To improve visual experience of a user, a handheld intelligent terminal with a super large screen becomes a development trend. A 4.5-inch screen has become a mainstream configuration for a flagship model, while a 4.7-inch or a 5.0-inch screen is going to become a screen configuration for a flagship model of a next-generation intelligent terminal.

Generally, an input method of a hand-held terminal supports dynamic adjustment of an arrangement sequence of words, that is, performing an intelligent ranking according to frequency of use of the words, so as to place the most commonly used word on the top of candidate words. For example, the words are successively arranged from left to right and from top to bottom according to the frequency of use from high to low, so that the user can select a desired word easily.

A handheld terminal has a relatively large screen, and candidate words are usually arranged from left to right, that is, the most commonly used word is generally placed in the leftmost position. Therefore, when a user holds a mobile phone with a right hand, it is not easy for a thumb of the right hand to reach the leftmost position, which brings inconvenience to the user.
US 2013/234948 A1 describes systems and methods for controlling the location of a virtual keyboard in a graphical user interface GUI displayed on a display screen of a handheld electronic device.
The therein described systems and methods provide a selecting and an updating location of virtual keyboard in a GUI layout in response to orientation change of a portable device.

### SUMMARY

### Technical problem

In view of this, a technical problem to be resolved in the present invention is how to optimize an input operation interface of a hand-held terminal so as to improve input experience of a user.

### Solution

The present invention will be carried out according to the attached independent claims. Further embodiments are defined by the dependen claims. To resolve the foregoing technical problem, an embodiment of the present invention provides a method for displaying an input operation interface of a hand-held terminal, including: determining whether a user performs an input operation on the input operation interface of the hand-held terminal, wherein said input operation interface is a touch screen, by using a right hand or a left hand; if a result of determining is that the user performs the input operation by using the right hand, setting input keys, which are on the input operation interface, to be arranged from right to left according to a preset rule; and if a result of determining is that the user performs the input operation by using the left hand, setting the input keys, which are on the input operation interface, to be arranged from left to right according to the preset rule.

With reference to the foregoing method for displaying an input operation interface of an intelligent terminal, in a possible implementation manner, the determining whether a user performs an input operation on the input operation interface of the hand-held terminal by using a right hand or a left hand includes: determining, on a basis of a touch time interval of a key, whether the user performs the input operation by using the right hand or the left hand, where the key is located on the input operation interface, and the touch time interval of the key indicates a time interval between a previous touch and a current touch of the key.

With reference to the foregoing method for displaying an input operation interface of a hand-held terminal, in a possible implementation manner, the determining, on a basis of a touch time interval of a key, whether the user performs the input operation by using the right hand or the left hand includes: collecting, in a preset length of time, statistics about a first touch time interval and a second touch time interval, where the first touch time interval indicates an average value of a touch time interval of at least one key on a left side of the input operation interface, and the second touch time interval indicates an average value of a touch time interval of at least one key on a right side of the input operation interface; if the first touch time interval is less than the second touch time interval, determining that the user performs the input operation by using the left hand; and if the first touch time interval is greater than the second touch time interval, determining that the user performs the input operation by using the right hand.

With reference to the foregoing method for displaying an input operation interface of a hand-held terminal, in a possible implementation manner, the determining whether a user performs an input operation on the input operation interface of the intelligent terminal by using a right hand or a left hand includes: determining, on a basis of a probability at which a sub-area of a key is touched, whether the user performs the input operation by using the right hand or the left hand, where the key is located on the input operation interface, the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

With reference to the foregoing method for displaying an input operation interface of a hand-held terminal, in a possible implementation manner, the determining, on a basis of a probability at which a sub-area of a key is touched, whether the user performs the input operation by using the right hand or the left hand includes: collecting, in a preset length of time, statistics about a first touch probability and a second touch probability, where the first touch probability indicates a probability at which a lower left sub-area of a key on an upper right side of the input operation interface is touched, and the second touch probability indicates a probability at which a lower right sub-area of a key on an upper left side of the input operation interface is touched; if the first touch probability is greater than the second touch probability, determining that the user performs the input operation by using the left hand; and if the first touch probability is less than the second touch probability, determining that the user performs the input operation by using the right hand.

With reference to the foregoing method for displaying an input operation interface of a hand-held terminal, in a possible implementation manner, the determining, on a basis of a probability at which a sub-area of a key is touched, whether the user performs the input operation by using the right hand or the left hand includes: collecting, in a preset length of time, statistics about a first touch probability and a second touch probability, where the first touch probability indicates a probability at which a left-side sub-area of a key on a lower right side of the input operation interface is touched, and the second touch probability indicates a probability at which a right-side sub-area of a key on a lower left side of the input operation interface is touched; if the first touch probability is greater than the second touch probability, determining that the user performs the input operation by using the left hand; and if the first touch probability is less than the second touch probability, determining that the user performs the input operation by using the right hand.

With reference to the foregoing method for displaying an input operation interface of a hand-held terminal, in a possible implementation manner, the determining, on a basis of a probability at which a sub-area of a key is touched, whether the user performs the input operation by using the right hand or the left hand includes: collecting, in a preset length of time, statistics about a first touch probability, a second touch probability, a third touch probability, and a fourth touch probability, where the first touch probability indicates an average value of a probability at which right-side sub-areas of at least two keys on a left side of the input operation interface are touched, the second touch probability indicates an average value of a probability at which left-side sub-areas of at least two keys on the left side are touched, the third touch probability indicates an average value of a probability at which right-side sub-areas of at least two keys on a right side of the input operation interface are touched, and the fourth touch probability indicates an average value of a probability at which left-side sub-areas of at least two keys on the right side are touched; calculating a left-side touch probability difference and a right-side touch probability difference, where the left-side touch probability difference equals a value obtained by subtracting the second touch probability from the first touch probability, and the right-side touch probability difference equals a value obtained by subtracting the fourth touch probability from the third touch probability; and if the left-side touch probability difference is greater than a first threshold and the right-side touch probability difference is less than a second threshold, determining that the user performs the input operation by using the right hand.

With reference to the foregoing method for displaying an input operation interface of a hand-held terminal, in a possible implementation manner, the input keys include at least one of the following: a candidate word key, a punctuation mark key, a numeric key, and a regular key.

With reference to the foregoing method for displaying an input operation interface of an intelligent terminal, in a possible implementation manner, the preset rule includes at least one of the following: a probability of use, a user preference, and network term frequency.

To resolve the foregoing technical problem, an embodiment of the present invention provides an intelligent terminal, including: a determining module, configured to determine whether a user performs an input operation on an input operation interface of the hand-held terminal by using a right hand or a left hand; and a setting module, connected to the determining module and configured to: if a result of determining is that the user performs the input operation by using the right hand, set input keys, which are on the input operation interface, to be arranged from right to left according to a preset rule; and if a result of determining is that the user performs the input operation by using the left hand, set the input keys, which are on the input operation interface, to be arranged from left to right according to the preset rule.

With reference to the hand-held terminal, in a possible implementation manner, the determining module includes: a first determining unit, configured to determine, on a basis of a touch time interval of a key, whether the user performs the input operation by using the right hand or the left hand, where the key is located on the input operation interface, and the touch time interval of the key indicates a time interval between a previous touch and a current touch of the key.

With reference to the foregoing hand-held terminal, in a possible implementation manner, the determining module further includes a first calculating unit connected to the first determining unit, where the first calculating unit is configured to: collect, in a preset length of time, statistics about a first touch time interval and a second touch time interval, where the first touch time interval indicates an average value of a touch time interval of at least one key on a left side of the input operation interface, and the second touch time interval indicates an average value of a touch time interval of at least one key on a right side of the input operation interface; and the first determining unit is configured to: compare the first touch time interval with the second touch time interval; if the first touch time interval is less than the second touch time interval, determine that the user performs the input operation by using the left hand; and if the first touch time interval is greater than the second touch time interval, determine that the user performs the input operation by using the right hand.

With reference to the foregoing hand-held terminal, in a possible implementation manner, the determining module includes: a second determining unit, configured to determine, on a basis of a probability at which a sub-area of a key is touched, whether the user performs the input operation by using the right hand or the left hand, where the key is located on the input operation interface, the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

With reference to the foregoing hand-held terminal, in a possible implementation manner, the determining module further includes a second calculating unit connected to the second determining unit, where the second calculating unit is configured to collect, in a preset length of time, statistics about a first touch probability and a second touch probability, where the first touch probability indicates a probability at which a lower left sub-area of a key on an upper right side of the input operation interface is touched, and the second touch probability indicates a probability at which a lower right sub-area of a key on an upper left side of the input operation interface is touched; and the second determining unit is configured to: compare the first touch probability with the second touch probability; if the first touch probability is greater than the second touch probability, determine that the user performs the input operation by using the left hand; and if the first touch probability is less than the second touch probability, determine that the user performs the input operation by using the right hand.

With reference to the foregoing hand-held terminal, in a possible implementation manner, the second calculating unit is further configured to collect, in a preset length of time, statistics about a first touch probability and a second touch probability, where the first touch probability indicates a probability at which a left-side sub-area of a key on a lower right side of the input operation interface is touched, and the second touch probability indicates a probability at which a right-side sub-area of a key on a lower left side of the input operation interface is touched.

With reference to the foregoing hand-held terminal, in a possible implementation manner, the second calculating unit is further configured to collect, in a preset length of time, statistics about a first touch probability, a second touch probability, a third touch probability, and a fourth touch probability, where the first touch probability indicates an average value of a probability at which right-side sub-areas of at least two keys on a left side of the input operation interface are touched, the second touch probability indicates an average value of a probability at which left-side sub-areas of at least two keys on the left side are touched, the third touch probability indicates an average value of a probability at which right-side sub-areas of at least two keys on a right side of the input operation interface are touched, and the fourth touch probability indicates an average value of a probability at which left-side sub-areas of at least two keys on the right side are touched; and calculate a left-side touch probability difference and a right-side touch probability difference, where the left-side touch probability difference equals a value obtained by subtracting the second touch probability from the first touch probability, and the right-side touch probability difference equals a value obtained by subtracting the fourth touch probability from the third touch probability; and the second determining unit is configured to: compare the left-side touch probability difference with a first threshold, and the right-side touch probability difference with a second threshold; and if the left-side touch probability difference is greater than the first threshold and the right-side touch probability difference is less than the second threshold, determine that the user performs the input operation by using the right hand.

With reference to the foregoing hand-held terminal, in a possible implementation manner, the input keys include at least one of the following: a candidate word key, a punctuation mark key, a numeric key, and a regular key.

With reference to the foregoing hand-held terminal, in a possible implementation manner, the preset rule includes at least one of the following: a probability of use, a user preference, and network term frequency.

### BENEFICIAL EFFECT

According to the hand-held terminal and the method for displaying an input operation interface thereof in the embodiments of the present invention, whether a user performs an input operation on the input operation interface of the hand-held terminal by using a right hand or a left hand is determined, and then a sequence of input keys on the input operation interface is adjusted according to a result of determining, so that the user can easily extend a finger of the user on a large screen, which greatly increases an input speed of the user and improves user experience.

Exemplary embodiments are described in detail with reference to accompanying drawings in the following to make other features and aspects of the present invention clear.

### BRIEF DESCRIPTION OF DRAWINGS

Accompanying drawings included in the specification and constituting a part of the specification and the specification illustrate exemplary embodiments, features, and aspects of the present invention, and are used for explaining principles of the present invention.
FIG. 1 is a flowchart of a method for displaying an input operation interface of a hand-held terminal according to an embodiment of the present invention;
FIG. 2 is a flowchart of a method for displaying an input operation interface of a hand-held terminal according to another embodiment of the present invention;
FIG. 3 is a schematic diagram of a 9-key input operation interface;
FIG. 4 is a flowchart of a method for displaying an input operation interface of hand-held terminal according to still another embodiment of the present invention;
FIG. 5 is a schematic diagram of dividing an input key on a 9-key input operation interface into sub-areas;
FIG. 6 is a flowchart of a method for displaying an input operation interface of a hand-held terminal according to still another embodiment of the present invention;
FIG. 7 is a structural block diagram of hand-held terminal according to an embodiment of the present invention;
FIG. 8 is a structural block diagram of a hand-held terminal according to another embodiment of the present invention; and
FIG. 9 is a schematic structural diagram of an intelligent terminal according to still another embodiment of the present invention.

### DESCRIPTION OF EMBODIMENTS

Various exemplary embodiments, features, and aspects of the present invention are described in detail hereinafter with reference to accompanying drawings. In the drawings, identical reference numerals denote elements that have an identical or similar function. Although various aspects of the embodiments are shown in the drawings, unless otherwise specified, the drawings are not necessarily drawn to scale.

The specific term "exemplary" herein means "used as an example, embodiment or illustrative". Any embodiment described as "exemplary" is not necessarily explained as being superior or better than other embodiments.

In addition, to better describe the present invention, many details are given in the following specific implementation manners.

### Embodiment 1

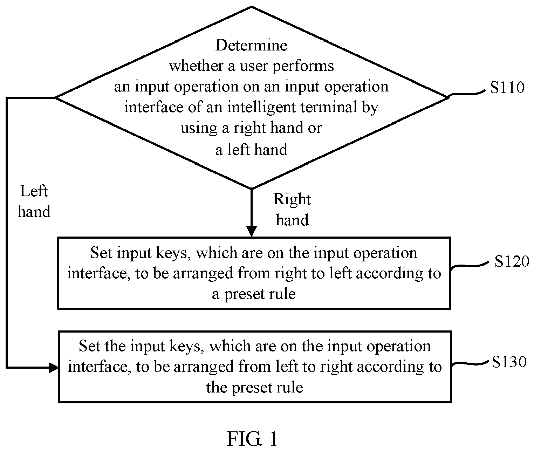

FIG. 1 is a flowchart of a method for displaying an input operation interface of a hand-held terminal according to an embodiment of the present invention. As shown in FIG. 1, the method mainly includes the following steps:
S110. Determine whether a user performs an input operation on the input operation interface of the hand-held terminal by using a right hand or a left hand.

Generally, time needed in reaching a distant key by extending a thumb and time for accurately positioning the key are longer than time needed in reaching a near key by extending the thumb and time for accurately positioning the key. Therefore, in a possible implementation manner, whether the user performs the input operation by using the right hand or the left hand may be determined on a basis of a touch time interval of a key, where the key is located on the input operation interface, and the touch time interval of the key indicates a time interval between a previous touch and a current touch of the key.

In addition, when the thumb presses a key in a different area, generally, limited by a length of the thumb, the thumb may press an edge of the key. Therefore, in another possible implementation manner, whether the user performs the input operation on the input operation interface of the hand-held terminal by using the right hand or the left hand may also be determined on a basis of a probability at which a sub-area of the key is touched, where the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

S120. If a result of determining is that the user performs the input operation by using the right hand, set input keys, which are on the input operation interface, to be arranged from right to left according to a preset rule.

S130. If a result of determining is that the user performs the input operation by using the left hand, set the input keys, which are on the input operation interface, to be arranged from left to right according to the preset rule.

In a possible implementation manner, the input keys may include at least one of the following: a candidate word key, a punctuation mark key, a numeric key, and a regular key.

In a possible implementation manner, the preset rule may include at least one of the following: a probability of use, a user preference, and network term frequency. Specifically, the input keys may be arranged according to the probability of use from high to low and on a basis of the foregoing determination result, and an arrangement sequence of the input keys may also be correspondingly adjusted in a case of a different determination result according to a personal preference of the user. In addition, if the hand-held terminal is connected to a network, a candidate word recommended by the network may also be arranged to be near to a finger by which the user performs the input operation.

Therefore, according to the method for displaying an input operation interface of a hand-held terminal in this embodiment, a sequence of input keys on the input operation interface is adjusted according to a result of determining whether a user performs an input operation on the input operation interface of the hand-held terminal by using a right hand or a left hand, so that the user can easily extend a finger of the user on a large screen, which greatly increases an input speed of the user and improves user experience.

### Embodiment 2

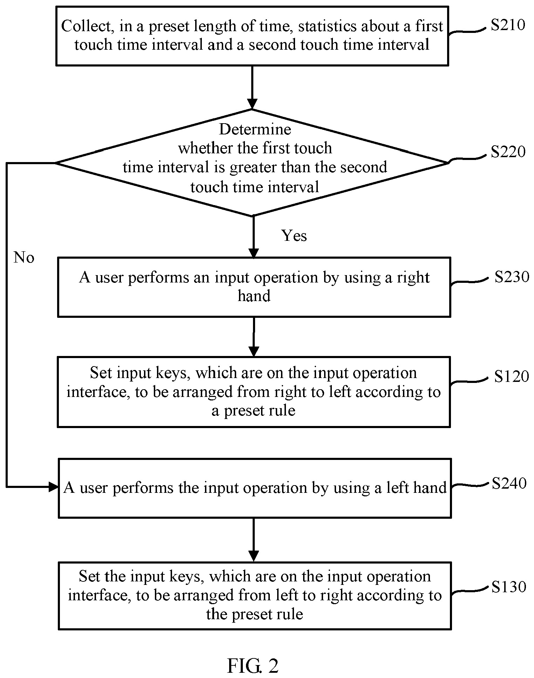

FIG. 2 is a flowchart of a method for displaying an input operation interface of a hand-held terminal according to another embodiment of the present invention. A component in FIG. 2 that has a same reference numeral as that in FIG. 1 has a same function. For brevity, a detailed description of these components is omitted.

As shown in FIG. 2, a main difference between the method for displaying an input operation interface of a hand-held terminal shown in FIG. 2 and the method for displaying an input operation interface of a hand-held terminal shown in FIG. 1 is that: in a possible implementation manner, specific operation steps of step S110 in Embodiment 1 may be:
S210. Collect, in a preset length of time, statistics about a first touch time interval and a second touch time interval. In a possible implementation manner, the first touch time interval may indicate an average value of a touch time interval of at least one key on a left side of the input operation interface, and the second touch time interval may indicate an average value of a touch time interval of at least one key on a right side of the input operation interface.
S220. Determine whether the first touch time interval is greater than the second touch time interval.
S230. If the first touch time interval is greater than the second touch time interval, determine that the user performs the input operation by using the right hand.
S240. If the first touch time interval is less than the second touch time interval, determine that the user performs the input operation by using the left hand.

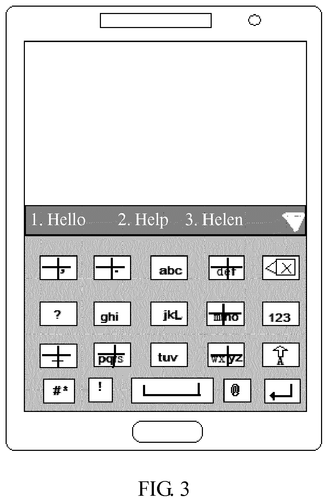

Specifically, statistics about the touch time interval of the key may be collected in the preset length of time. That is, statistics about a time interval between the first touch of the key and the second touch of the key that are in the preset length of time are collected, statistics about a time interval between the second touch of the key and the third touch of the key are collected, and by analogy, statistics about a time interval between the second-to-last touch of the key and the last touch of the key that are in the preset length of time are collected. Then, a length of a touch time interval of a key in a different position of the input operation interface is analyzed. A 9-key input operation interface shown in FIG. 3 is used as an example. If an average touch time interval of keys, such as ",", "ghi", and "pqrs", on a left side of the 9-key input operation interface is less than an average touch time interval of keys, such as "def", "mno", and "wxyz", on a right side of the 9-key input operation interface, it is determined that the user performs the input operation by using the left hand. If the former average touch time interval is greater than the latter average touch time interval, it is determined that the user performs the input operation by using the right hand.

It should be noted that, if a time interval between a key press and a next key press exceeds a preset time threshold, for example, 30 seconds, the next key press is used as a first key press in another preset length of time. Preferably, for more convenient use of a 9-key input method by the user, an arrangement sequence of a candidate word is adjusted only once in one preset length of time.

Therefore, according to the method for displaying an input operation interface of a hand-held terminal in this embodiment, whether a user performs an input operation by using a right hand or a left hand is determined on a basis of a touch time interval of a key, and then a sequence of input keys on the input operation interface is adjusted according to a result of determining, so that the user can easily extend a finger of the user on a large screen, which greatly increases an input speed of the user and improves user experience.

### Embodiment 3

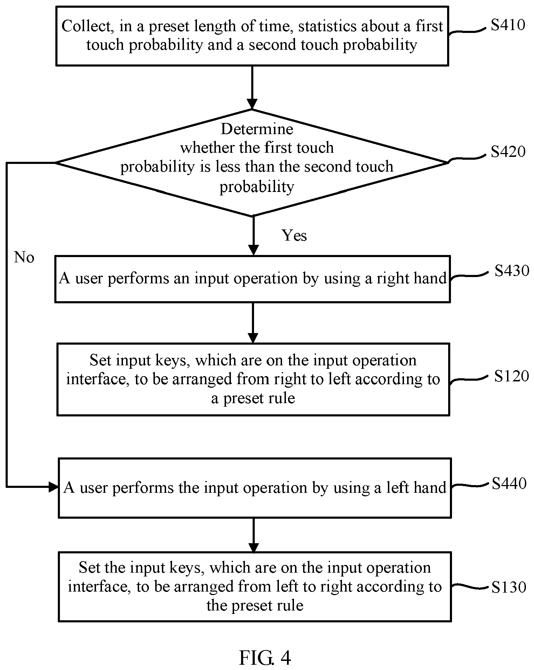

FIG. 4 is a flowchart of a method for displaying an input operation interface of a hand-held terminal according to still another embodiment of the present invention. A component in FIG. 4 that has a same reference numeral as that in FIG. 1 has a same function. For brevity, a detailed description of these components is omitted.

As shown in FIG. 4, a main difference between the method for displaying an input operation interface of a hand-held terminal shown in FIG. 4 and the method for displaying an input operation interface of a hand-held terminal shown in FIG. 1 is that: in a possible implementation manner, specific operation steps of step S110 in Embodiment 1 may further be:
S410. Collect, in a preset length of time, statistics about a first touch probability and a second touch probability. In a possible implementation manner, the first touch probability may indicate a probability at which a lower left sub-area of a key on an upper right side of the input operation interface is touched, and the second touch time interval may indicate a probability at which a lower right sub-area of a key on an upper left side of the input operation interface is touched.

In another possible implementation manner, the first touch probability may indicate a probability at which a left-side sub-area of a key on a lower right side of the input operation interface is touched, and the second touch probability may indicate a probability at which a right-side sub-area of a key on a lower left side of the input operation interface is touched.

S420. Determine whether the first touch probability is less than the second touch probability.

S430. If the first touch time interval is less than the second touch time interval, determine that the user performs the input operation by using the right hand.

S440. If the first touch time interval is greater than the second touch time interval, determine that the user performs the input operation by using the left hand.

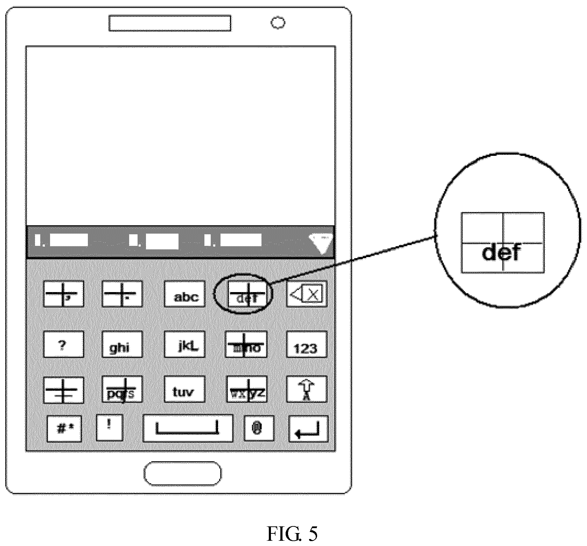

Specifically, as shown in FIG. 5, each input key on a 9-key input operation interface of the hand-held terminal may be divided into four small areas: an upper left side, a lower left side, an upper right side, and a lower right side. Statistics about a probability P1 at which a lower left sub-area of a "def" key on an upper right side of the 9-key input operation interface is touched and a probability P2 at which a lower right sub-area of a "," key on an upper left side of the 9-key input operation interface is touched are collected in a preset length of time after the user starts to enter. If the P1 is greater than the P2, it is determined that the user performs the input operation by using the left hand. If the P1 is less than the P2, it is determined that the user performs the input operation by using the right hand.

In addition, statistics about a probability P3 at which a left-side sub-area of a "wxyz" key on a lower right side of the 9-key input operation interface is touched and a probability P4 at which a right-side sub-area of a "pqrs" key on a lower left side of the input operation interface is touched may also be collected. If the P3 is greater than the P4, it is determined that the user performs the input operation by using the left hand. If the P3 is less than the P4, it is determined that the user performs the input operation by using the right hand.

Likewise, if a time interval between a key press and a next key press exceeds a preset time threshold, for example, 30 seconds, the next key press is used as a first key press in another preset length of time. Preferably, for more convenient use of a 9-key input method by the user, an arrangement sequence of a candidate word is adjusted only once in one preset length of time.

Therefore, according to the method for displaying an input operation interface of an intelligent terminal in this embodiment, whether a user performs an input operation by using a right hand or a left hand is determined on a basis of a probability at which a sub-area of a key is touched, and then a sequence of input keys on the input operation interface is adjusted according to a result of determining, so that the user can easily extend a finger of the user on a large screen, which greatly increases an input speed of the user and improves user experience.

### Embodiment 4

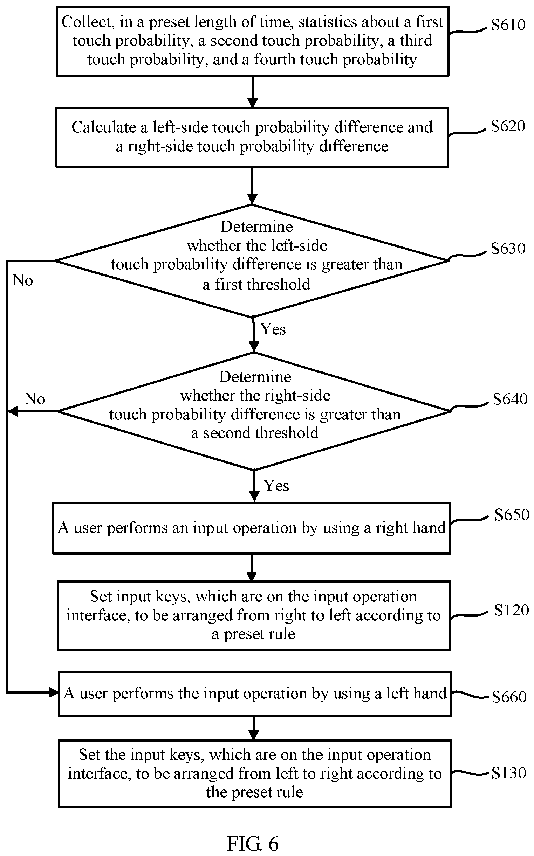

FIG. 6 is a flowchart of a method for displaying an input operation interface of a hand-held terminal according to still another embodiment of the present invention. A component in FIG. 6 that has a same reference numeral as that in FIG. 1 has a same function. For brevity, a detailed description of these components is omitted.

As shown in FIG. 6, a main difference between the method for displaying an input operation interface o a hand-held terminal shown in FIG. 6 and the method for displaying an input operation interface of a hand-held terminal shown in FIG. 1 is that: in a possible implementation manner, specific operation steps of step S110 in Embodiment 1 may further be:
S610. Collect, in a preset length of time, statistics about a first touch probability, a second touch probability, a third touch probability, and a fourth touch probability. In a possible implementation manner, the first touch probability may indicate an average value of a probability at which right-side sub-areas of at least two keys on a left side of the input operation interface are touched, the second touch probability may indicate an average value of a probability at which left-side sub-areas of at least two keys on the left side are touched, the third touch probability may indicate an average value of a probability at which right-side sub-areas of at least two keys on a right side of the input operation interface are touched, and the fourth touch probability may indicate an average value of a probability at which left-side sub-areas of at least two keys on the right side are touched.
S620. Calculate a left-side touch probability difference and a right-side touch probability difference. In a possible implementation manner, the left-side touch probability difference may equal a value obtained by subtracting the second touch probability from the first touch probability, and the right-side touch probability difference may equal a value obtained by subtracting the fourth touch probability from the third touch probability.
S630. Determine whether the left-side touch probability difference is greater than a first threshold.
S640. If the left-side touch probability difference is greater than the first threshold, determine whether the right-side touch probability difference is less than a second threshold.
S650. If the right-side touch probability difference is less than the second threshold, determine that a user performs an input operation by using a right hand.
S660. If the left-side touch probability difference is less than the first threshold, or the left-side touch probability difference is greater than the first threshold and the right-side touch probability difference is greater than the second threshold, determine that the user performs the input operation by using a left hand.

Therefore, according to the method for displaying an input operation interface of an intelligent terminal in this embodiment, whether a user performs an input operation by using a right hand or a left hand is determined on a basis of a probability at which a sub-area of a key is touched, and then a sequence of input keys on the input operation interface is adjusted according to a result of determining, so that the user can easily extend a finger of the user on a large screen, which greatly increases an input speed of the user and improves user experience.

It should be noted that, although whether the user performs the input operation by using the right hand or the left hand is described in the foregoing examples on a basis of the touch time interval of the key and on a basis of the probability at which the sub-area of the key is touched, a person skilled in the art should understand that the present invention is not limited thereto. All manners in which whether the user performs the input operation by using the right hand or the left hand is determined by detecting a touch action and/or a tapping action performed by a finger of the user on the input operation interface of a terminal device, and input keys are adjusted to a corresponding side according to a result of determining shall fall within the scope of the present invention.

### Embodiment 5

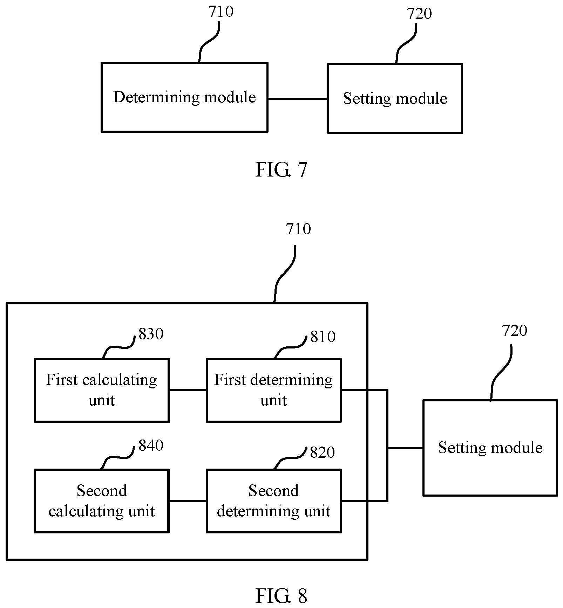

FIG. 7 is a structural block diagram of a hand-held terminal according to an embodiment of the present invention. As shown in FIG. 7, the hand-held terminal includes a determining module 710 and a setting module 720. The determining module 710 is configured to determine whether a user performs an input operation on an input operation interface of the hand-held terminal by using a right hand or a left hand. The setting module 720 is connected to the determining module 710 and configured to: if a result of determining is that the user performs the input operation by using the right hand, set input keys, which are on the input operation interface, to be arranged from right to left according to a preset rule; and if a result of determining is that the user performs the input operation by using the left hand, set the input keys, which are on the input operation interface, to be arranged from left to right according to the preset rule.

In a possible implementation manner, the input keys may include at least one of the following: a candidate word key, a punctuation mark key, a numeric key, and a regular key.

In a possible implementation manner, the preset rule may include at least one of the following: a probability of use, a user preference, and network term frequency.

In a possible implementation manner, as shown in FIG. 8, the determining module 710 may include a first determining unit 810 or a second determining unit 820. The first determining unit 810 is configured to determine, on a basis of a touch time interval of a key, whether the user performs the input operation by using the right hand or the left hand, where the key is located on the input operation interface, and the touch time interval of the key indicates a time interval between a previous touch and a current touch of the key. The second determining unit 820 is configured to determine, on a basis of a probability at which a sub-area of the key is touched, whether the user performs the input operation by using the right hand or the left hand, where the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

In a possible implementation manner, the determining module 710 may further include a first calculating unit 830 connected to the first determining unit 810. The first calculating unit 830 is configured to collect, in a preset length of time, statistics about a first touch time interval and a second touch time interval, where the first touch time interval indicates an average value of a touch time interval of at least one key on a left side of the input operation interface, and the second touch time interval indicates an average value of a touch time interval of at least one key on a right side of the input operation interface. The first determining unit 810 is configured to: compare the first touch time interval with the second touch time interval; if the first touch time interval is less than the second touch time interval, determine that the user performs the input operation by using the left hand; and if the first touch time interval is greater than the second touch time interval, determine that the user performs the input operation by using the right hand.

In a possible implementation manner, the determining module 710 may further include a second calculating unit 840 connected to the second determining unit 820. The second calculating unit 840 is configured to collect, in a preset length of time, statistics about a first touch probability and a second touch probability, where the first touch probability indicates a probability at which a lower left sub-area of a key on an upper right side of the input operation interface is touched, and the second touch probability indicates a probability at which a lower right sub-area of a key on an upper left side of the input operation interface is touched. The second determining unit 820 is configured to: compare the first touch probability with the second touch probability; if the first touch probability is greater than the second touch probability, determine that the user performs the input operation by using the left hand; and if the first touch probability is less than the second touch probability, determine that the user performs the input operation by using the right hand.

In a possible implementation manner, the second calculating unit 840 is further configured to collect, in a preset length of time, statistics about a first touch probability and a second touch probability, where the first touch probability indicates a probability at which a left-side sub-area of a key on a lower right side of the input operation interface is touched, and the second touch probability indicates a probability at which a right-side sub-area of a key on a lower left side of the input operation interface is touched.

In a possible implementation manner, the second calculating unit 840 is further specifically configured to collect, in a preset length of time, statistics about a first touch probability, a second touch probability, a third touch probability, and a fourth touch probability, where the first touch probability indicates an average value of a probability at which right-side sub-areas of at least two keys on a left side of the input operation interface are touched, the second touch probability indicates an average value of a probability at which left-side sub-areas of at least two keys on the left side are touched, the third touch probability indicates an average value of a probability at which right-side sub-areas of at least two keys on a right side of the input operation interface are touched, and the fourth touch probability indicates an average value of a probability at which left-side sub-areas of at least two keys on the right side are touched; and calculate a left-side touch probability difference and a right-side touch probability difference, where the left-side touch probability difference equals a value obtained by subtracting the second touch probability from the first touch probability, and the right-side touch probability difference equals a value obtained by subtracting the fourth touch probability from the third touch probability. The second determining unit 820 is configured to: compare the left-side touch probability difference with a first threshold, and the right-side touch probability difference with a second threshold; and if the left-side touch probability difference is greater than the first threshold and the right-side touch probability difference is less than the second threshold, determine that the user performs the input operation by using the right hand.

According to the hand-held terminal in this embodiment, a determining module determines whether a user performs an input operation on an input operation interface of the hand-held terminal by using a right hand or a left hand, and then a setting module adjusts a sequence of input keys on the input operation interface on a basis of a result of determining, so that the user can easily extend a finger of the user on a large screen, which greatly increases an input speed of the user and improves user experience.

### Embodiment 6

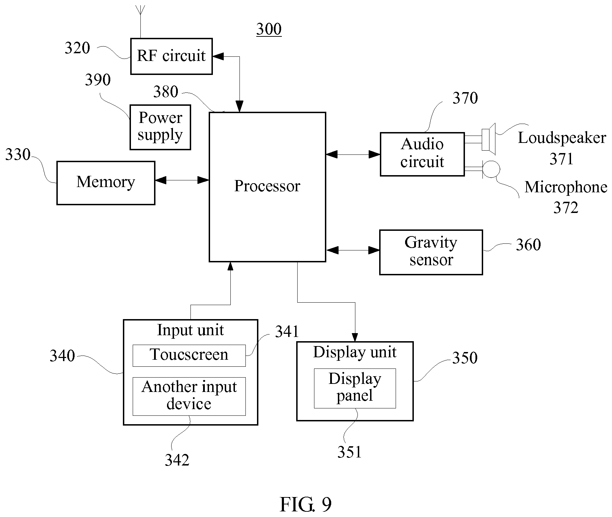

FIG. 9 is a schematic structural diagram of a hand-held terminal according to an embodiment of the present invention. The hand-held terminal provided in this embodiment of the present invention may be configured to perform the methods for implementing the embodiments of the present invention shown in FIG. 1 to FIG. 6. For ease of description, only a part related to this embodiment of the present invention is illustrated. For technical details that are not disclosed, reference may be made to the embodiments of the present invention shown in FIG. 1 to FIG. 6.

The intelligent terminal may be a terminal device that has a touch keyboard for input, such as a mobile phone, a tablet computer, a notebook computer, a UMPC (Ultra-mobile Personal Computer, ultra-mobile personal computer), a netbook, or a PDA (Personal Digital Assistant, personal digital assistant). In this embodiment of the present invention, it is assumed that the intelligent terminal is a mobile phone. FIG. 9 is a structural block diagram of a part of a mobile phone 300 related to the embodiments of the present invention.

As shown in FIG. 9, the mobile phone 300 includes parts such as an RF (radio frequency, radio frequency) circuit 320, a memory 330, an input unit 340, a display unit 350, a gravity sensor 360, an audio circuit 370, a processor 380, and a power supply 390. A person skilled in the art may understand that a structure of the mobile phone shown in FIG. 9 constitutes no limitation on the mobile phone, and instead the mobile phone may include more or fewer parts than those shown in FIG. 9, or a combination of some parts, or parts disposed differently.

With reference to FIG. 9, the following specifically describes each constituent part of the mobile phone 300.

The RF circuit 320 may be configured to receive and send a signal in an information receiving or sending process or a call process, and in particular, after receiving downlink information of a base station, send the downlink information to the processor 380 for processing; and in addition, send uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 320 may further communicate with a network and another device by using radio communications. The radio communications may be performed by using any communications standard or protocol, including but not being limited to a GSM (Global System of Mobile Communications), a GPRS (General Packet Radio Service), a CDMA (Code Division Multiple Access), a WCDMA (Wideband Code Division Multiple Access), an LTE (Long Term Evolution), and the like.

The memory 330 may be configured to store a software program and a software module, and the processor 380 executes various functional applications and data processing of the mobile phone 300 by running the software program and the software module that are stored in the memory 330. The memory 330 may mainly include a program storing area and a data storing area, where the program storing area may store an operating system, an application program required by at least one function (such as an audio playing function or an video playing function), and the like; and the data storing area may store data (such as audio data, image data, or a phonebook) created according to use of the mobile phone 300, and the like. In addition, the memory 330 may include a high-speed random access memory, and may further include a nonvolatile memory, for example, at least one magnetic disk storage device, a flash memory device, or another volatile solid-state storage device.

The input unit 340 may be configured to receive input numeric or character information, and generate signal input related to a user setting and function control of the mobile phone 300. Specifically, the input unit 340 may include a touchscreen 341 and another input device 342. The touchscreen 341, also referred to as a touch panel, may collect a user's touch operation (such as an operation that the user performs on the touchscreen 341 or near the touchscreen 341 by using a finger, a stylus, or any other suitable object or accessory) on or near the touchscreen, and drives a corresponding connected apparatus according to a preset program. Optionally, the touchscreen 341 may include two parts: a touch detection apparatus and a touch controller. The touch detection apparatus detects a touch orientation of a user, detects a signal generated by a touch operation, and sends the signal to the touch controller. The touch controller receives touch information from the touch detection apparatus, converts the touch information into touch coordinates, and sends the touch coordinates to the processor 380; and the touch controller can also receive and execute a command sent from the processor 380. In addition, the touchscreen 341 may be implemented in multiple forms, such as a resistive form, a capacitive form, an infrared form, and a surface acoustic wave form. In addition to the touchscreen 341, the input unit 340 may further include the another input device 342. Specifically, the another input device 342 may include but is not limited to one or more of: a physical keyboard, a function key (such as a volume control key or a power on/off key), a trackball, a mouse, a joystick, and the like.

The display unit 350 may be configured to display information entered by the user or information provided for the user, and various menus of the mobile phone 300. The display unit 350 may include a display panel 351. Optionally, the display panel 351 may be configured in a form of an LCD (Liquid Crystal Display, liquid crystal display), an OLED (Organic Light-Emitting Diode, organic light emitting diode), and the like. Further, the touchscreen 341 may cover the display panel 351. When the touchscreen 341 detects a touch operation on or near the touchscreen 341, the touchscreen 341 sends a signal to the processor 380 to determine a type of the touch event. Then the processor 380 provides corresponding visual output on the display panel 351 according to the type of the touch event. In FIG. 3, the touchscreen 341 and the display panel 351 are used as two independent parts to implement input and output functions of the mobile phone 300. However, in some embodiments, the touchscreen 341 and the display panel 351 may be integrated to implement the input and output functions of the mobile phone 300.

The gravity sensor (gravity sensor) 360 may detect a value of acceleration of the mobile phone in each direction (generally, three axes); when the mobile phone stays still, may detect a value and a direction of gravity; and may be configured in an application that recognizes a mobile phone posture (such as screen switching between portrait and landscape modes, a related game, and magnetometer posture calibration), a function related to vibration recognition (such as a pedometer and knocking), and the like.

The mobile phone 300 may further include another sensor, such as an optical sensor. Specifically, the optical sensor may include an ambient light sensor and a proximity sensor. The ambient light sensor may adjust brightness of the display panel 351 according to brightness of ambient light. The proximity sensor may detect whether an object moves closer to or touches the mobile phone; and when the mobile phone 300 moves to an ear, the proximity sensor may close the display panel 351 and/or backlight. The mobile phone 300 may be further configured with other sensors, such as a gyroscope, a barometer, a hygrometer, a thermometer, and an infrared sensor, which are not described in detail herein again.

The audio circuit 370, a loudspeaker 371, and a microphone 372 may provide an audio interface between the user and the mobile phone 300. The audio circuit 370 may transmit a received electrical signal converted from audio data to the loudspeaker 371, and the loudspeaker 371 converts the electrical signal into an audio signal for output. In another aspect, the microphone 372 converts a collected audio signal into an electrical signal. The audio circuit 370 receives the electrical signal, converts the electrical signal into audio data, and outputs the audio data to the RF circuit 320 to send the audio data to, for example, another mobile phone, or outputs the audio data to the memory 330 for further processing.

The processor 380 is a control center of the mobile phone 300, and uses various interfaces and lines to connect parts of the entire mobile phone. By running or executing the software program and/or the software module that are/is stored in the memory 330 and invoking data stored in the memory 330, the processor 380 executes various functional applications of the mobile phone 300 and processes data, so as to perform overall monitoring on the mobile phone. Optionally, the processor 380 may include one or more processing units. Preferably, the processor 380 may integrate an application processor and a modulation and demodulation processor, where the application processor mainly processes the operating system, a user interface, an application program, and the like, and the modulation and demodulation processor mainly processes wireless communications. It may be understood that, the processor 380 may also not integrate the modulation and demodulation processor.

The mobile phone 300 further includes the power supply 390 (for example, a battery) that supplies power to each part. Preferably, the power supply may be logically connected to the processor 380 by using a power supply management system, so that functions such as charging, discharging, and power consumption management are implemented by using the power supply management system.

The mobile phone 300 may further include a WiFi (wireless fidelity, Wireless Fidelity) module, a Bluetooth module, and the like that are not shown in FIG. 9, and details are not described herein again.

In this embodiment of the present invention, the memory 330 is further configured to store code of a program that includes a computer operation instruction. The program may be specifically configured to: determine whether a user performs an input operation on an input operation interface of the intelligent terminal by using a right hand or a left hand; if a result of determining is that the user performs the input operation by using the right hand, set input keys, which are on the input operation interface, to be arranged from right to left according to a preset rule; and if a result of determining is that the user performs the input operation by using the left hand, set the input keys, which are on the input operation interface, to be arranged from left to right according to the preset rule. The input keys may include at least one of the following: a candidate word key, a punctuation mark key, a numeric key, and a regular key. The preset rule may include at least one of the following: a probability of use, a user preference, and network term frequency.

In a possible implementation manner, the program may be further specifically configured to determine, on a basis of a touch time interval of a key, whether the user performs the input operation by using the right hand or the left hand, where the key is located on the input operation interface, and the touch time interval of the key indicates a time interval between a previous touch and a current touch of the key.

In a possible implementation manner, the program may be further specifically configured to: collect, in a preset length of time, statistics about a first touch time interval and a second touch time interval, where the first touch time interval indicates an average value of a touch time interval of at least one key on a left side of the input operation interface, and the second touch time interval indicates an average value of a touch time interval of at least one key on a right side of the input operation interface; if the first touch time interval is less than the second touch time interval, determine that the user performs the input operation by using the left hand; and if the first touch time interval is greater than the second touch time interval, determine that the user performs the input operation by using the right hand.

In a possible implementation manner, the program may be further specifically configured to determine, on a basis of a probability at which a sub-area of a key is touched, whether the user performs the input operation by using the right hand or the left hand, where the key is located on the input operation interface, the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

In a possible implementation manner, the program may be further specifically configured to collect, in a preset length of time, statistics about a first touch probability and a second touch probability, where the first touch probability indicates a probability at which a lower left sub-area of a key on an upper right side of the input operation interface is touched, and the second touch probability indicates a probability at which a lower right sub-area of a key on an upper left side of the input operation interface is touched; if the first touch probability is greater than the second touch probability, determine that the user performs the input operation by using the left hand; and if the first touch probability is less than the second touch probability, determine that the user performs the input operation by using the right hand.

In a possible implementation manner, the program may be further specifically configured to collect, in a preset length of time, statistics about a first touch probability and a second touch probability, where the first touch probability indicates a probability at which a left-side sub-area of a key on a lower right side of the input operation interface is touched, and the second touch probability indicates a probability at which a right-side sub-area of a key on a lower left side of the input operation interface is touched; if the first touch probability is greater than the second touch probability, determine that the user performs the input operation by using the left hand; and if the first touch probability is less than the second touch probability, determine that the user performs the input operation by using the right hand.

In a possible implementation manner, the program is further specifically configured to: collect, in a preset length of time, statistics about a first touch probability, a second touch probability, a third touch probability, and a fourth touch probability, where the first touch probability indicates an average value of a probability at which right-side sub-areas of at least two keys on a left side of the input operation interface are touched, the second touch probability indicates an average value of a probability at which left-side sub-areas of at least two keys on the left side are touched, the third touch probability indicates an average value of a probability at which right-side sub-areas of at least two keys on a right side of the input operation interface are touched, and the fourth touch probability indicates an average value of a probability at which left-side sub-areas of at least two keys on the right side are touched; calculate a left-side touch probability difference and a right-side touch probability difference, where the left-side touch probability difference equals a value obtained by subtracting the second touch probability from the first touch probability, and the right-side touch probability difference equals a value obtained by subtracting the fourth touch probability from the third touch probability; and if the left-side touch probability difference is greater than a first threshold and the right-side touch probability difference is less than a second threshold, determine that the user performs the input operation by using the right hand.

## Claims

1. A method for determining an input operation interface of a hand-held terminal, comprising:
determining (S110) whether a user performs an input operation on the input operation interface of the hand-held terminal, wherein said input operation interface is a touch-screen, by using a right hand or a left hand;
if a result of determining is that the user performs the input operation by using the right hand, setting (S120) input keys, which are on the input operation interface, to be arranged from right to left according to a preset rule; and
if a result of determining is that the user performs the input operation by using the left hand, setting (S130) the input keys, which are on the input operation interface, to be arranged from left to right according to the preset rule;
**characterized in that** the determining whether a user performs an input operation on the input operation interface of the hand-held terminal by using a right hand or a left hand comprises:
determining on a basis of a probability at which a sub-area of a key is touched, whether the user performs the input operation by using the right hand or the left hand, wherein the key is located on the input operation interface, the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

2. The method according to claim 1, wherein the determining, on a basis of a probability at which a sub-area of a key is touched, whether the user performs the input operation by using the right hand or the left hand comprises:
collecting, in a preset length of time, statistics about a first touch probability and a second touch probability, wherein said statistics about the first touch probability indicates a probability at which a lower left sub-area of a key on an upper right side of the input operation interface is touched, and said statistics about the second touch probability indicates a probability at which a lower right sub-area of a key on an upper left side of the input operation interface is touched;
if the first touch probability is greater than the second touch probability, determining that the user performs the input operation by using the left hand; and
if the first touch probability is less than the second touch probability, determining that the user performs the input operation by using the right hand.

3. The method according to claim 1 or 2, wherein the determining, on a basis of a probability at which a sub-area of a key is touched, whether the user performs the input operation by using the right hand or the left hand comprises:
collecting, in a preset length of time, statistics about a first touch probability and a second touch probability, wherein said statistics about the first touch probability indicates a probability at which a left-side sub-area of a key on a lower right side of the input operation interface is touched, and said statistics about the second touch probability indicates a probability at which a right-side sub-area of a key on a lower left side of the input operation interface is touched;
if the first touch probability is greater than the second touch probability, determining that the user performs the input operation by using the left hand; and
if the first touch probability is less than the second touch probability, determining that the user performs the input operation by using the right hand.

4. The method according to any one of claims 1 to 3, wherein the determining, on a basis of a probability at which a sub-area of a key is touched, whether the user performs the input operation by using the right hand or the left hand comprises:
collecting, in a preset length of time, statistics about a first touch probability, a second touch probability, a third touch probability, and a fourth touch probability, wherein said statistics about the first touch probability indicates an average value of a probability at which right-side sub-areas of at least two keys on a left side of the input operation interface are touched, said statistics about the second touch probability indicates an average value of a probability at which left-side sub-areas of at least two keys on the left side are touched, said statistics about the third touch probability indicates an average value of a probability at which right-side sub-areas of at least two keys on a right side of the input operation interface are touched, and said statistics about the fourth touch probability indicates an average value of a probability at which left-side sub-areas of at least two keys on the right side are touched;
calculating a left-side touch probability difference and a right-side touch probability difference, wherein
the left-side touch probability difference equals a value obtained by subtracting the second touch probability from the first touch probability, and
the right-side touch probability difference equals a value obtained by subtracting the fourth touch probability from the third touch probability; and
if the left-side touch probability difference is greater than a first threshold and the right-side touch probability difference is less than a second threshold, determining that the user performs the input operation by using the right hand.

5. The method according to any one of claims 1 to 4, wherein the input keys comprise at least one of the following: a candidate word key, a punctuation mark key, a numeric key, and a regular key.

6. The method according to any one of claims 1 to 5, wherein the preset rule comprises at least one of the following: a probability of use, a user preference, and in case the hand-held terminal is connected to a network, a candidate word recommended by the network.

7. A hand-held terminal, comprising:
a determining module (710), to determine whether a user performs an input operation on an input operation interface of the hand-held terminal, wherein said input operation interface is a touch-screen, by using a right hand or a left hand; and
a setting module (720), connected to the determining module and to:
if a result of determining is that the user performs the input operation by using the right hand, set input keys, which are on the input operation interface, to be arranged from right to left according to a preset rule; and if a result of determining is that the user performs the input operation by using the left hand, set the input keys, which are on the input operation interface, to be arranged from left to right according to the preset rule; **characterized in that**
the determining module comprises:
a second determining unit, to determine, on a basis of a probability at which a sub-area of a key is touched, whether the user performs the input operation by using the right hand or the left hand, wherein the key is located on the input operation interface, the sub-area indicates a part on an upper left side, a lower left side, an upper right side, a lower right side, a left side, or a right side of the key, and the probability at which the sub-area of the key is touched indicates a proportion of a quantity of times the sub-area is touched in a total quantity of times the key is touched.

8. The hand-held terminal according to claim 7, wherein the determining module further comprises a second calculating unit connected to the second determining unit, wherein the second calculating unit is to collect, in a preset length of time, statistics about a first touch probability and a second touch probability, wherein said statistics about the first touch probability indicates a probability at which a lower left sub-area of a key on an upper right side of the input operation interface is touched, and said statistics about the second touch probability indicates a probability at which a lower right sub-area of a key on an upper left side of the input operation interface is touched; and the second determining unit is to: compare the first touch probability with the second touch probability; if the first touch probability is greater than the second touch probability, determine that the user performs the input operation by using the left hand; and if the first touch probability is less than the second touch probability, determine that the user performs the input operation by using the right hand.

9. The hand-held terminal according to claim 7 or 8, wherein the second calculating unit is further comprising means to:
collect, in a preset length of time, statistics about a first touch probability and a second touch probability, wherein said statistics about the first touch probability indicates a probability at which a left-side sub-area of a key on a lower right side of the input operation interface is touched, and said statistics about the second touch probability indicates a probability at which a right-side sub-area of a key on a lower left side of the input operation interface is touched.

10. The hand-held terminal according to any one of claims 7 to 9, wherein the second calculating unit is further comprising means to:
collect, in a preset length of time, statistics about a first touch probability, a second touch probability, a third touch probability, and a fourth touch probability, wherein said statistics about the first touch probability indicates an average value of a probability at which right-side sub-areas of at least two keys on a left side of the input operation interface are touched, said statistics about the second touch probability indicates an average value of a probability at which left-side sub-areas of at least two keys on the left side are touched, said statistics about the third touch probability indicates an average value of a probability at which right-side sub-areas of at least two keys on a right side of the input operation interface are touched, and said statistics about the fourth touch probability indicates an average value of a probability at which left-side sub-areas of at least two keys on the right side are touched; and
calculate a left-side touch probability difference and a right-side touch probability difference, wherein
the left-side touch probability difference equals a value obtained by subtracting the second touch probability from the first touch probability, and
the right-side touch probability difference equals a value obtained by subtracting the fourth touch probability from the third touch probability, wherein
the second determining unit is comprising means to: compare the left-side touch probability difference with a first threshold, and the right-side touch probability difference with a second threshold; and if the left-side touch probability difference is greater than the first threshold and the right-side touch probability difference is less than the second threshold, determine that the user performs the input operation by using the right hand.

11. The hand-held terminal according to any one of claims 7 to 10, wherein the input keys comprise at least one of the following: a candidate word key, a punctuation mark key, a numeric key, and a regular key.

12. The hand-held terminal according to any one of claims 7 to 11, wherein the preset rule comprises at least one of the following: a probability of use, a user preference, and in case the hand-held terminal is connected to a network, a candidate word recommended by the network.

## Patentansprüche

1. Verfahren zum Bestimmen einer Eingabeschnittstelle eines tragbaren Endgeräts umfassend:
Bestimmen (S110), ob ein Benutzer eine Eingabeoperation auf der Eingabeschnittstelle des tragbaren Endgeräts, wobei die Eingabeschnittstelle ein Berührungsbildschirm ist, mithilfe einer rechten Hand oder einer linken Hand ausführt;
falls ein Ergebnis der Bestimmung ist, dass der Benutzer die Eingabeoperation mithilfe der rechten Hand ausführt, Einstellen (S120) von Eingabetasten, welche sich auf der Eingabeschnittstelle befinden, so dass sie gemäß einer vorgegebenen Regel von rechts nach links angeordnet sind; und
falls ein Ergebnis der Bestimmung ist, dass der Benutzer die Eingabeoperation mithilfe der linken Hand ausführt, Einstellen (S130) der Eingabetasten, welche sich auf der Eingabeschnittstelle befinden, so dass sie gemäß der vorgegebenen Regel von links nach rechts angeordnet sind;
**dadurch gekennzeichnet, dass** das Bestimmen, ob ein Benutzer eine Eingabeoperation auf der Eingabeschnittstelle des tragbaren Endgeräts mithilfe einer rechten Hand oder einer linken Hand ausführt, umfasst:
Bestimmen, auf einer Basis einer Wahrscheinlichkeit, mit welcher ein Teilbereich einer Taste berührt wird, ob der Benutzer die Eingabeoperation mithilfe der rechten Hand oder der linken Hand ausführt, wobei die Taste auf der Eingabeschnittstelle angeordnet ist, der Teilbereich einen Teil auf einer oberen linken Seite, einer unteren linken Seite, einer oberen rechten Seite, einer unteren rechten Seite, einer linken Seite oder einer rechten Seite der Taste angibt und die Wahrscheinlichkeit, mit welcher der Teilbereich der Taste berührt wird, ein Verhältnis einer Anzahl von Malen, die der Teilbereich berührt wird, zu einer Gesamtanzahl von Malen, die die Taste berührt wird, angibt.

2. Verfahren nach Anspruch 1, wobei das Bestimmen, auf einer Basis einer Wahrscheinlichkeit, mit welcher ein Teilbereich einer Taste berührt wird, ob der Benutzer die Eingabeoperation mithilfe der rechten Hand oder der linken Hand ausführt, umfasst:
Sammeln, in einem vorgegebenen Zeitraum, von statistischen Daten über eine erste Berührungswahrscheinlichkeit und eine zweite Berührungswahrscheinlichkeit, wobei die statistischen Daten über die erste Berührungswahrscheinlichkeit eine Wahrscheinlichkeit angeben, mit welcher ein unterer linker Teilbereich einer Taste auf einer oberen rechten Seite der Eingabeschnittstelle berührt wird, und
die statistischen Daten über die zweite Berührungswahrscheinlichkeit eine Wahrscheinlichkeit angeben, mit welcher ein unterer rechter Teilbereich einer Taste auf einer oberen linken Seite der Eingabeschnittstelle berührt wird;
falls die erste Berührungswahrscheinlichkeit größer als die zweite Berührungswahrscheinlichkeit ist, Bestimmen, dass der Benutzer die Eingabeoperation mithilfe der linken Hand ausführt; und
falls die erste Berührungswahrscheinlichkeit kleiner als die zweite Berührungswahrscheinlichkeit ist, Bestimmen, dass der Benutzer die Eingabeoperation mithilfe der rechten Hand ausführt.

3. Verfahren nach Anspruch 1 oder 2, wobei das Bestimmen, auf einer Basis einer Wahrscheinlichkeit, mit welcher ein Teilbereich einer Taste berührt wird, ob der Benutzer die Eingabeoperation mithilfe der rechten Hand oder der linken Hand ausführt, umfasst:
Sammeln, in einem vorgegebenen Zeitraum, von statistischen Daten über eine erste Berührungswahrscheinlichkeit und eine zweite Berührungswahrscheinlichkeit, wobei die statistischen Daten über die erste Berührungswahrscheinlichkeit eine Wahrscheinlichkeit angeben, mit welcher ein linker Teilbereich einer Taste auf einer unteren rechten Seite der Eingabeschnittstelle berührt wird, und
die statistischen Daten über die zweite Berührungswahrscheinlichkeit eine Wahrscheinlichkeit angeben, mit welcher ein rechter Teilbereich einer Taste auf einer unteren linkten Seite der Eingabeschnittstelle berührt wird;
falls die erste Berührungswahrscheinlichkeit größer als die zweite Berührungswahrscheinlichkeit ist, Bestimmen, dass der Benutzer die Eingabeoperation mithilfe der linken Hand ausführt; und
falls die erste Berührungswahrscheinlichkeit kleiner als die zweite Berührungswahrscheinlichkeit ist, Bestimmen, dass der Benutzer die Eingabeoperation mithilfe der rechten Hand ausführt.

4. Verfahren nach einem der Ansprüche 1 bis 3, wobei das Bestimmen, auf einer Basis einer Wahrscheinlichkeit, mit welcher ein Teilbereich einer Taste berührt wird, ob der Benutzer die Eingabeoperation mithilfe der rechten Hand oder der linken Hand ausführt, umfasst:
Sammeln, in einem vorgegebenen Zeitraum, von statistischen Daten über eine erste Berührungswahrscheinlichkeit, eine zweite Berührungswahrscheinlichkeit, eine dritte Berührungswahrscheinlichkeit und eine vierte Berührungswahrscheinlichkeit, wobei die statistischen Daten über die erste Berührungswahrscheinlichkeit einen Durchschnittswert einer Wahrscheinlichkeit angeben, mit welcher rechte Teilbereiche wenigstens zweier Tasten auf einer linken Seite der Eingabeschnittstelle berührt werden,
die statistischen Daten über die zweite Berührungswahrscheinlichkeit einen Durchschnittswert einer Wahrscheinlichkeit angeben, mit welcher linke Teilbereiche wenigstens zweier Tasten auf der linken Seite berührt werden,
die statistischen Daten über die dritte Berührungswahrscheinlichkeit einen Durchschnittswert einer Wahrscheinlichkeit angeben, mit welcher rechte Teilbereiche wenigstens zweier Tasten auf einer rechten Seite der Eingabeschnittstelle berührt werden, und
die statistischen Daten über die vierte Berührungswahrscheinlichkeit einen Durchschnittswert einer Wahrscheinlichkeit angeben, mit welcher linke Teilbereiche wenigstens zweier Tasten auf der rechten Seite berührt werden;
Berechnen einer Differenz der Berührungswahrscheinlichkeiten der linken Seite und einer Differenz der Berührungswahrscheinlichkeiten der rechten Seite, wobei die Differenz der Berührungswahrscheinlichkeiten der linken Seite gleich einem Wert ist, der erhalten wird, indem die zweite Berührungswahrscheinlichkeit von der ersten Berührungswahrscheinlichkeit subtrahiert wird, und
die Differenz der Berührungswahrscheinlichkeiten der rechten Seite gleich einem Wert ist, der erhalten wird, indem die vierte Berührungswahrscheinlichkeit von der dritten Berührungswahrscheinlichkeit subtrahiert wird; und
falls die Differenz der Berührungswahrscheinlichkeiten der linken Seite größer als ein erster Schwellenwert ist und die Differenz der Berührungswahrscheinlichkeiten der rechten Seite kleiner als ein zweiter Schwellenwert ist, Bestimmen, dass der Benutzer die Eingabeoperation mithilfe der rechten Hand ausführt.

5. Verfahren nach einem der Ansprüche 1 bis 4, wobei die Eingabetasten wenigstens eines von Folgendem umfassen: eine Kandidatenwort-Taste, eine Satzzeichentaste, eine Zifferntaste und eine reguläre Taste.

6. Verfahren nach einem der Ansprüche 1 bis 5, wobei die vorgegebene Regel wenigstens eines von Folgendem umfasst: eine Wahrscheinlichkeit der Verwendung, eine Benutzerpräferenz, und falls das tragbare Endgerät mit einem Netz verbunden ist, ein von dem Netz empfohlenes Kandidatenwort.

7. Tragbares Endgerät, welches umfasst:
ein Bestimmungsmodul (710), um zu bestimmen, ob ein Benutzer eine Eingabeoperation auf einer Eingabeschnittstelle des tragbaren Endgeräts, wobei die Eingabeschnittstelle ein Berührungsbildschirm ist, mithilfe einer rechten Hand oder einer linken Hand ausführt; und
ein Einstellmodul (720), das mit dem Bestimmungsmodul verbunden ist, um:
falls ein Ergebnis der Bestimmung ist, dass der Benutzer die Eingabeoperation mithilfe der rechten Hand ausführt, Eingabetasten, welche sich auf der Eingabeschnittstelle befinden, so einzustellen, dass sie gemäß einer vorgegebenen Regel von rechts nach links angeordnet sind; und falls ein Ergebnis der Bestimmung ist, dass der Benutzer die Eingabeoperation mithilfe der linken Hand ausführt, die Eingabetasten, welche sich auf der Eingabeschnittstelle befinden, so einzustellen, dass sie gemäß der vorgegebenen Regel von links nach rechts angeordnet sind; **dadurch gekennzeichnet, dass** das Bestimmungsmodul umfasst:
eine zweite Bestimmungseinheit, um auf einer Basis einer Wahrscheinlichkeit, mit welcher ein Teilbereich einer Taste berührt wird, zu bestimmen, ob der Benutzer die Eingabeoperation mithilfe der rechten Hand oder der linken Hand ausführt, wobei die Taste auf der Eingabeschnittstelle angeordnet ist, der Teilbereich einen Teil auf einer oberen linken Seite, einer unteren linken Seite, einer oberen rechten Seite, einer unteren rechten Seite, einer linken Seite oder einer rechten Seite der Taste angibt und die Wahrscheinlichkeit, mit welcher der Teilbereich der Taste berührt wird, ein Verhältnis einer Anzahl von Malen, die der Teilbereich berührt wird, zu einer Gesamtanzahl von Malen, die die Taste berührt wird, angibt.

8. Tragbares Endgerät nach Anspruch 7, wobei das Bestimmungsmodul ferner eine zweite Berechnungseinheit umfasst, die mit der zweiten Bestimmungseinheit verbunden ist, wobei
die zweite Berechnungseinheit dazu bestimmt ist, in einem vorgegebenen Zeitraum statistische Daten über eine erste Berührungswahrscheinlichkeit und eine zweite Berührungswahrscheinlichkeit zu sammeln, wobei
die statistischen Daten über die erste Berührungswahrscheinlichkeit eine Wahrscheinlichkeit angeben, mit welcher ein unterer linker Teilbereich einer Taste auf einer oberen rechten Seite der Eingabeschnittstelle berührt wird, und
die statistischen Daten über die zweite Berührungswahrscheinlichkeit eine Wahrscheinlichkeit angeben, mit welcher ein unterer rechter Teilbereich einer Taste auf einer oberen linken Seite der Eingabeschnittstelle berührt wird; und
die zweite Bestimmungseinheit dazu bestimmt ist, die erste Berührungswahrscheinlichkeit mit der zweiten Berührungswahrscheinlichkeit zu vergleichen; falls die erste Berührungswahrscheinlichkeit größer als die zweite Berührungswahrscheinlichkeit ist, zu bestimmen, dass der Benutzer die Eingabeoperation mithilfe der linken Hand ausführt; und falls die erste Berührungswahrscheinlichkeit kleiner als die zweite Berührungswahrscheinlichkeit ist, zu bestimmen, dass der Benutzer die Eingabeoperation mithilfe der rechten Hand ausführt.

9. Tragbares Endgerät nach Anspruch 7 oder 8, wobei die zweite Berechnungseinheit ferner Mittel umfasst, um:
in einem vorgegebenen Zeitraum statistische Daten über eine erste Berührungswahrscheinlichkeit und eine zweite Berührungswahrscheinlichkeit zu sammeln, wobei
die statistischen Daten über die erste Berührungswahrscheinlichkeit eine Wahrscheinlichkeit angeben, mit welcher ein linker Teilbereich einer Taste auf einer unteren rechten Seite der Eingabeschnittstelle berührt wird, und
die statistischen Daten über die zweite Berührungswahrscheinlichkeit eine Wahrscheinlichkeit angeben, mit welcher ein rechter Teilbereich einer Taste auf einer unteren linken Seite der Eingabeschnittstelle berührt wird.

10. Tragbares Endgerät nach einem der Ansprüche 7 bis 9, wobei die zweite Berechnungseinheit ferner Mittel umfasst, um:
in einem vorgegebenen Zeitraum statistische Daten über eine erste Berührungswahrscheinlichkeit, eine zweite Berührungswahrscheinlichkeit, eine dritte Berührungswahrscheinlichkeit und eine vierte Berührungswahrscheinlichkeit zu sammeln, wobei
die statistischen Daten über die erste Berührungswahrscheinlichkeit einen Durchschnittswert einer Wahrscheinlichkeit angeben, mit welcher rechte Teilbereiche wenigstens zweier Tasten auf einer linken Seite der Eingabeschnittstelle berührt werden,
die statistischen Daten über die zweite Berührungswahrscheinlichkeit einen Durchschnittswert einer Wahrscheinlichkeit angeben, mit welcher linke Teilbereiche wenigstens zweier Tasten auf der linken Seite berührt werden,
die statistischen Daten über die dritte Berührungswahrscheinlichkeit einen Durchschnittswert einer Wahrscheinlichkeit angeben, mit welcher rechte Teilbereiche wenigstens zweier Tasten auf einer rechten Seite der Eingabeschnittstelle berührt werden, und
die statistischen Daten über die vierte Berührungswahrscheinlichkeit einen Durchschnittswert einer Wahrscheinlichkeit angeben, mit welcher linke Teilbereiche wenigstens zweier Tasten auf der rechten Seite berührt werden; und
eine Differenz der Berührungswahrscheinlichkeiten der linken Seite und eine Differenz der Berührungswahrscheinlichkeiten der rechten Seite zu berechnen, wobei die Differenz der Berührungswahrscheinlichkeiten der linken Seite gleich einem Wert ist, der erhalten wird, indem die zweite Berührungswahrscheinlichkeit von der ersten Berührungswahrscheinlichkeit subtrahiert wird, und
die Differenz der Berührungswahrscheinlichkeiten der rechten Seite gleich einem Wert ist, der erhalten wird, indem die vierte Berührungswahrscheinlichkeit von der dritten Berührungswahrscheinlichkeit subtrahiert wird, wobei die zweite Bestimmungseinheit Mittel umfasst, um die Differenz der Berührungswahrscheinlichkeiten der linken Seite mit einem ersten Schwellenwert und die Differenz der Berührungswahrscheinlichkeiten der rechten Seite mit einem zweiten Schwellenwert zu vergleichen; und falls die Differenz der Berührungswahrscheinlichkeiten der linken Seite größer als der erste Schwellenwert ist und die Differenz der Berührungswahrscheinlichkeiten der rechten Seite kleiner als der zweite Schwellenwert ist, zu bestimmen, dass der Benutzer die Eingabeoperation mithilfe der rechten Hand ausführt.

11. Tragbares Endgerät nach einem der Ansprüche 7 bis 10, wobei die Eingabetasten wenigstens eines von Folgendem umfassen: eine Kandidatenwort-Taste, eine Satzzeichentaste, eine Zifferntaste und eine reguläre Taste.

12. Tragbares Endgerät nach einem der Ansprüche 7 bis 11, wobei die vorgegebene Regel wenigstens eines von Folgendem umfasst: eine Wahrscheinlichkeit der Verwendung, eine Benutzerpräferenz, und falls das tragbare Endgerät mit einem Netz verbunden ist, ein von dem Netz empfohlenes Kandidatenwort.

## Revendications

1. Procédé de détermination d'une interface d'opération d'entrée d'un terminal tenu à la main, le procédé comprenant les étapes suivantes :
détermination (S110) qu'un utilisateur accomplit ou non une opération d'entrée sur l'interface d'opération d'entrée du terminal tenu à la main, ladite interface d'opération d'entrée étant un écran tactile, à l'aide d'une main droite ou bien d'une main gauche ;
si un résultat de l'étape de détermination est que l'utilisateur accomplit l'opération d'entrée à l'aide de la main droite, positionnement (S120) de touches d'entrée, situées sur l'interface d'opération d'entrée, suivant un agencement de la droite vers la gauche selon une règle préétablie ; et
si un résultat de l'étape de détermination est que l'utilisateur accomplit l'opération d'entrée à l'aide de la main gauche, positionnement (S130) des touches d'entrée, situées sur l'interface d'opération d'entrée, suivant un agencement de la gauche vers la droite selon la règle préétablie ;
le procédé étant **caractérisé en ce que** l'étape de détermination qu'un utilisateur accomplit ou non une opération d'entrée sur l'interface d'opération d'entrée du terminal tenu à la main à l'aide d'une main droite ou bien d'une main gauche comprend l'étape suivante :
détermination, en fonction d'une probabilité d'un toucher d'une sous-zone d'une touche, que l'utilisateur accomplit l'opération d'entrée à l'aide de la main droite ou bien de la main gauche, la touche étant située sur l'interface d'opération d'entrée, la sous-zone indiquant une partie d'un côté supérieur gauche, d'un côté inférieur gauche, d'un côté supérieur droit, d'un côté inférieur droit, d'un côté gauche ou d'un côté droit de la touche, et la probabilité d'un toucher de la sous-zone de la touche indiquant une proportion d'un nombre de touchers de la sous-zone sur un nombre total de touchers de la touche.

2. Procédé selon la revendication 1, dans lequel l'étape de détermination, en fonction d'une probabilité d'un toucher d'une sous-zone d'une touche, que l'utilisateur accomplit ou non l'opération d'entrée à l'aide de la main droite ou bien de la main gauche comprend les étapes suivantes :
collecte, pendant une durée préétablie, de statistiques relatives à une première probabilité de toucher et à une deuxième probabilité de toucher, lesdites statistiques relatives à la première probabilité de toucher indiquant une probabilité d'un toucher d'une sous-zone inférieure gauche d'une touche d'un côté supérieur droit de l'interface d'opération d'entrée, et lesdites statistiques relatives à la deuxième probabilité de toucher indiquant une probabilité d'un toucher d'une sous-zone inférieure droite d'une touche d'un côté supérieur gauche de l'interface d'opération d'entrée ;
si la première probabilité de toucher est supérieure à la deuxième probabilité de toucher, détermination selon laquelle l'utilisateur accomplit l'opération d'entrée à l'aide de la main gauche ; et
si la première probabilité de toucher est inférieure à la deuxième probabilité de toucher, détermination selon laquelle l'utilisateur accomplit l'opération d'entrée à l'aide de la main droite.

3. Procédé selon la revendication 1 ou 2, dans lequel l'étape de détermination, en fonction d'une probabilité d'un toucher d'une sous-zone d'une touche, que l'utilisateur accomplit ou non l'opération d'entrée à l'aide de la main droite ou bien de la main gauche comprend les étapes suivantes :
collecte, pendant une durée préétablie, de statistiques relatives à une première probabilité de toucher et à une deuxième probabilité de toucher, lesdites statistiques relatives à la première probabilité de toucher indiquant une probabilité d'un toucher d'une sous-zone de côté gauche d'une touche d'un côté inférieur droit de l'interface d'opération d'entrée, et lesdites statistiques relatives à la deuxième probabilité de toucher indiquant une probabilité d'un toucher d'une sous-zone de côté droit d'une touche d'un côté inférieur gauche de l'interface d'opération d'entrée ;
si la première probabilité de toucher est supérieure à la deuxième probabilité de toucher, détermination selon laquelle l'utilisateur accomplit l'opération d'entrée à l'aide de la main gauche ; et
si la première probabilité de toucher est inférieure à la deuxième probabilité de toucher, détermination selon laquelle l'utilisateur accomplit l'opération d'entrée à l'aide de la main droite.

4. Procédé selon l'une quelconque des revendications 1 à 3, dans lequel l'étape de détermination, en fonction d'une probabilité d'un toucher d'une sous-zone d'une touche, que l'utilisateur accomplit ou non l'opération d'entrée à l'aide de la main droite ou bien de la main gauche comprend les étapes suivantes :
collecte, pendant une durée préétablie, de statistiques relatives à une première probabilité de toucher, à une deuxième probabilité de toucher, à une troisième probabilité de toucher et à une quatrième probabilité de toucher, lesdites statistiques relatives à la première probabilité de toucher indiquant une valeur moyenne d'une probabilité d'un toucher de sous-zones de côté droit d'au moins deux touches d'un côté gauche de l'interface d'opération d'entrée, lesdites statistiques relatives à la deuxième probabilité de toucher indiquant une valeur moyenne d'une probabilité d'un toucher de sous-zones de côté gauche d'au moins deux touches du côté gauche,
lesdites statistiques relatives à la troisième probabilité de toucher indiquant une valeur moyenne d'une probabilité d'un toucher de sous-zones de côté droit d'au moins deux touches d'un côté droit de l'interface d'opération d'entrée et lesdites statistiques relatives à la quatrième probabilité de toucher indiquant une valeur moyenne d'une probabilité d'un toucher de sous-zones de côté gauche d'au moins deux touches du côté droit ;
calcul d'une différence de probabilités de toucher de côté gauche et une différence de probabilités de toucher de côté droit, la différence de probabilités de toucher de côté gauche étant égale à une valeur obtenue par soustraction de la deuxième probabilité de toucher à la première probabilité de toucher, et la deuxième différence de probabilités de toucher de côté droit étant égale à une valeur obtenue par soustraction de la quatrième probabilité de toucher à la troisième probabilité de toucher ; et
si la différence de probabilités de toucher de côté gauche est supérieure à un premier seuil et la différence de probabilités de toucher de côté droit est inférieure à un deuxième seuil, détermination selon laquelle l'utilisateur accomplit l'opération d'entrée à l'aide de la main droite.

5. Procédé selon l'une quelconque des revendications 1 à 4, dans lequel les touches d'entrée comprennent au moins un des éléments dans le groupe constitué par : une touche de mot candidat, une touche de signe de ponctuation, une touche numérique et une touche ordinaire.

6. Procédé selon l'une quelconque des revendications 1 à 5, dans lequel la règle préétablie comprend au moins un des éléments dans le groupe constitué par : une probabilité d'utilisation, une préférence de l'utilisateur et, dans le cas où le terminal tenu à la main est connecté à un réseau, un mot candidat recommandé par le réseau.

7. Terminal tenu à la main, comprenant :
un module de détermination (710), servant à déterminer si un utilisateur accomplit une opération d'entrée sur une interface d'opération d'entrée du terminal tenu à la main, ladite interface d'opération d'entrée étant un écran tactile, à l'aide d'une main droite ou bien d'une main gauche ; et
un module de positionnement (720), connecté au module de détermination et servant à :
si un résultat de la détermination est que l'utilisateur accomplit l'opération d'entrée à l'aide de la main droite, positionner des touches d'entrée, situées sur l'interface d'opération d'entrée, suivant un agencement de la droite vers la gauche selon une règle préétablie ; et si un résultat de la détermination est que l'utilisateur accomplit l'opération d'entrée à l'aide de la main gauche, positionner les touches d'entrée, situées sur l'interface d'opération d'entrée, suivant un agencement de la gauche vers la droite selon la règle préétablie ;
le terminal tenu à la main étant **caractérisé en ce que** le module de détermination comprend :
une deuxième unité de détermination, servant à déterminer, en fonction d'une probabilité d'un toucher d'une sous-zone d'une touche, si l'utilisateur accomplit l'opération d'entrée à l'aide de la main droite ou bien de la main gauche, la touche étant située sur l'interface d'opération d'entrée, la sous-zone indiquant une partie d'un côté supérieur gauche, d'un côté inférieur gauche, d'un côté supérieur droit, d'un côté inférieur droit, d'un côté gauche ou d'un côté droit de la touche, et la probabilité d'un toucher de la sous-zone de la touche indiquant une proportion d'un nombre de touchers de la sous-zone sur un nombre total de touchers de la touche.

8. Terminal tenu à la main selon la revendication 7, dans lequel le module de détermination comprend en outre une deuxième unité de calcul connectée à la deuxième unité de détermination,
la deuxième unité de calcul servant à collecter, pendant une durée préétablie, des statistiques relatives à une première probabilité de toucher et à une deuxième probabilité de toucher, lesdites statistiques relatives à la première probabilité de toucher indiquant une probabilité d'un toucher d'une sous-zone inférieure gauche d'une touche d'un côté supérieur droit de l'interface d'opération d'entrée, et lesdites statistiques relatives à la deuxième probabilité de toucher indiquant une probabilité d'un toucher d'une sous-zone inférieure droite d'une touche d'un côté supérieur gauche de l'interface d'opération d'entrée ; et
la deuxième unité de détermination servant à : comparer la première probabilité de toucher à la deuxième probabilité de toucher ; si la première probabilité de toucher est supérieure à la deuxième probabilité de toucher, déterminer que l'utilisateur accomplit l'opération d'entrée à l'aide de la main gauche ; et si la première probabilité de toucher est inférieure à la deuxième probabilité de toucher, déterminer que l'utilisateur accomplit l'opération d'entrée à l'aide de la main droite.

9. Terminal tenu à la main selon la revendication 7 ou 8, dans lequel la deuxième unité de calcul comprend en outre des moyens servant à :
collecter, pendant une durée préétablie, des statistiques relatives à une première probabilité de toucher et à une deuxième probabilité de toucher, lesdites statistiques relatives à la première probabilité de toucher indiquant une probabilité d'un toucher d'une sous-zone de côté gauche d'une touche d'un côté inférieur droit de l'interface d'opération d'entrée, et lesdites statistiques relatives à la deuxième probabilité de toucher indiquant une probabilité d'un toucher d'une sous-zone de côté droit d'une touche d'un côté inférieur gauche de l'interface d'opération d'entrée.

10. Terminal tenu à la main selon l'une quelconque des revendications 7 à 9, dans lequel la deuxième unité de calcul comprend en outre des moyens servant à :
collecter, pendant une durée préétablie, des statistiques relatives à une première probabilité de toucher, à une deuxième probabilité de toucher, à une troisième probabilité de toucher et à une quatrième probabilité de toucher, lesdites statistiques relatives à la première probabilité de toucher indiquant une valeur moyenne d'une probabilité d'un toucher de sous-zones de côté droit d'au moins deux touches d'un côté gauche de l'interface d'opération d'entrée, lesdites statistiques relatives à la deuxième probabilité de toucher indiquant une valeur moyenne d'une probabilité d'un toucher de sous-zones de côté gauche d'au moins deux touches du côté gauche, lesdites statistiques relatives à la troisième probabilité de toucher indiquant une valeur moyenne d'une probabilité d'un toucher de sous-zones de côté droit d'au moins deux touches d'un côté droit de l'interface d'opération d'entrée et lesdites statistiques relatives à la quatrième probabilité de toucher indiquant une valeur moyenne d'une probabilité d'un toucher de sous-zones de côté gauche d'au moins deux touches du côté droit ; et
calculer une différence de probabilités de toucher de côté gauche et une différence de probabilités de toucher de côté droit,
la différence de probabilités de toucher de côté gauche étant égale à une valeur obtenue par soustraction de la deuxième probabilité de toucher à la première probabilité de toucher, et
la différence de probabilités de toucher de côté droit étant égale à une valeur obtenue par soustraction de la quatrième probabilité de toucher à la troisième probabilité de toucher,
la deuxième unité de détermination comprenant des moyens servant à : comparer la différence de probabilités de toucher de côté gauche à un premier seuil et la différence de probabilités de toucher de côté droit à un deuxième seuil ; et si la différence de probabilités de toucher de côté gauche est supérieure au premier seuil et la différence de probabilités de toucher de côté droit est inférieure au deuxième seuil, déterminer que l'utilisateur accomplit l'opération d'entrée à l'aide de la main droite.

11. Terminal tenu à la main selon l'une quelconque des revendications 7 à 10, dans lequel les touches d'entrée comprennent au moins un des éléments dans le groupe constitué par : une touche de mot candidat, une touche de signe de ponctuation, une touche numérique et une touche ordinaire.

12. Terminal tenu à la main selon l'une quelconque des revendications 7 à 11, dans lequel la règle préétablie comprend au moins un des éléments dans le groupe constitué par : une probabilité d'utilisation, une préférence de l'utilisateur et, dans le cas où le terminal tenu à la main est connecté à un réseau, un mot candidat recommandé par le réseau.
